# EUROPÄISCHE PATENTANMELDUNG

(11) **EP 3 254 766 A1**
(43) Veröffentlichungstag der Anmeldung: **13.12.2017**
(21) Anmeldenummer: 17000901.3
(22) Anmeldetag: 29.05.2017
(51) Int. Cl.: B05C 5/02

(54) **MODULES (LEIM-)VENTIL**

(30) Priorität: 06.06.2016 DE 102016006786
(71) Anmelder: Focke & Co. (GmbH & Co. KG), 27283 Verden (DE)
(72) Erfinder: Walter, Jan-Christian, 21073 Hamburg (DE); Vollmer, Stephan, 21244 Buchholz (DE)
(74) Vertreter: Aulich, Martin

(57) **Zusammenfassung**

Die Erfindung betrifft ein modulares Ventil (14) für fließfähige Medien, insbesondere Leimventil, mit einem Grundmodul (64) mit einem Ventilgehäuse (25) und einem Elektro-Magneten, mit einem Dosiermodul (37, 37', 37") mit einem durch den Elektro-Magneten bewegbaren Verschlussorgan (32, 32'), das in einer Schließstellung des modularen Ventils (14) eine Ausgabeöffnung des Dosiermoduls (37, 37', 37") verschließt, und mit einem Ventilhubeinstellmodul (44, 44') zur Einstellung des Ventilhubs, das ein mindestens abschnittsweise in einem Ventilinnenraum des Grundmoduls (64) angeordnetes, längliches, in seiner axialen Stellung in dem Ventilinnenraum veränderbares Anschlagteil (49, 49') umfasst, das die Bewegung des Verschlussorgans (32, 32') in Richtung des Ventilhubeinstellmoduls (44, 44') begrenzt, wobei das Dosiermodul (37, 37', 37") und das Ventilhubeinstellmodul (44, 44') derart lösbar mit dem Grundmodul (64) verbunden sind, insbesondere verschraubt, dass die Module (37, 37', 37", 44, 44', 64), insbesondere das Dosiermodul (37, 37', 37") und das Ventilhubeinstellmodul (44, 44'), jeweils durch ein anderes Modul (37, 37', 37", 44, 44', 64) gleicher Modulart ersetzt werden kann.

## Beschreibung

Die Erfindung betrifft ein modulares Ventil für fließfähige Medien, insbesondere Leimventil. Des Weiteren betrifft die Erfindung ein Austauschdosiermodul sowie ein Austauschventilhubeinstellmodul für eine solches Ventil und einen Ventilmodulsatz.

(Leim-)Ventile sind in verschiedener Ausbildung bekannt. Unter anderem mittels Elektro-Magnet betriebene Ventile, bei denen ein einen Anker des Elektro-Magneten bildendes Verschlussorgan eine Ausgabeöffnung des Ventils schließt oder freigibt. Häufig sind solche Ventile derart ausgebildet, dass das Verschlussorgan in Schließstellung des Ventils durch eine permanente Schließkraft belastet ist und eine Öffnungsbewegung durch Aufbringung einer entgegengesetzten Magnetkraft des Elektro-Magneten bewirkt wird.

Solche Ventile können unter anderem nach der Art der Aufbringung der permanenten Schließkraft unterschieden werden. So ist es beispielsweise bekannt, diese mittels einer Feder aufzubringen oder mittels eines mehrere Einzelmagneten umfassenden Dauermagneten.

Derartige Ventile können auch nach der Art bzw. Form der erzeugbaren Mediumportionen unterschieden werden. So sind unter anderem Ventile bekannt, die einzelne, tropfenförmige Mediumportionen erzeugen. Im Unterschied dazu gibt es auch Ventile mit breiter, insbesondere schlitzförmiger Ausgabeöffnung für einen flächen- oder streifenförmigen Auftrag des fließfähigen Mediums bzw. des Leims.

Je nach Einsatzzweck muss entschieden werden, welche Art von Ventil eingesetzt wird. Gegebenenfalls ist dann jeweils nachteiliger Weise ein kostenintensiver Kompletttausch des jeweiligen Ventils notwendig.

Ausgehend hiervon ist es Aufgabe der vorliegenden Erfindung, eine einfache Anpassbarkeit von mit Elektro-Magnet betriebene Ventile an den jeweiligen Einsatzzweck zu ermöglichen.

Diese Aufgabe wird gelöst durch ein modulares Ventil mit den Merkmalen des Anspruchs 1, ein Austauschdosiermodul für ein solches modulares Ventil mit den Merkmalen des Anspruchs 11, ein Austauschventilhubeinstellmodul für ein solches modulares Ventil mit den Merkmalen des Anspruchs 15 sowie ein Ventilmodulsatz mit den Merkmalen des Anspruchs 18.

Ein erfindungsgemäßes modulares Ventil für fließfähige Medien, insbesondere Leimventil, verfügt über ein Grundmodul mit einem Ventilgehäuse und einem Elektro-Magneten, ein Dosiermodul mit einem durch den Elektro-Magneten bewegbaren Verschlussorgan, das in einer Schließstellung des modularen Ventils eine Ausgabeöffnung des Ventils bzw. des Dosiermoduls verschließt, und über ein Ventilhubeinstellmodul zur Einstellung des Ventilhubs, das ein mindestens abschnittsweise in einem Ventilinnenraum des Grundmoduls angeordnetes, längliches, in seiner axialen Stellung in dem Ventilinnenraum veränderbares Anschlagteil umfasst, das die Bewegung des Verschlussorgans in Richtung des Ventilhubeinstellmoduls begrenzt, wobei das Dosiermodul und das Ventilhubeinstellmodul derart lösbar mit dem Grundmodul verbunden sind, insbesondere verschraubt, dass die Module, insbesondere das Dosiermodul und das Ventilhubeinstellmodul, jeweils durch ein anderes Modul gleicher Modulart ersetzt werden können.

Diese erfindungsgemäße Modularität ermöglicht es beispielsweise, auf einfache Weise (ggf. nur, d.h. unter Beibehaltung des Grundmoduls) das Dosiermodul (Modulart "Dosiermodul") oder das Ventilhubeinstellmodul (Modulart "Ventilhubeinstellmodul") des Ventils zu wechseln bzw. zu ersetzen, wenn sich der Einsatzweck desselben ändert.

So könnte etwa in einem Fall, in dem ein Ventil mit besonders hohen Frequenzen betrieben wird, ein Dosiermodul und ein Ventilhubeinstellmodul verwendet werden, bei denen die (permanente) auf das Verschlussorgan wirkende Schließkraft mit einem Dauermagneten aufgebracht wird. Denn der Einsatz einer Feder zum Aufbringen derselben könnte in diesem Fall zu einem sehr hohen Verschleiß der Feder führen.

In einem anderen Fall dagegen, in dem das fließfähige Medium eine sehr hohe Viskosität aufweist, könnte ein Dosiermodul mit Feder gerade richtig sein, da eine Feder sich besonders für das Aufbringen von hohen Kräften eignet.

Naturgemäß ist die erfindungsgemäße Ventilmodularität auch von Vorteil, wenn eines der Module fehlerhaft ist.

Theoretisch kann im Übrigen auch das betreffende Modul der Modulart "Grundmodul" durch ein anderes Modul dieser Modulart ersetzt werden, etwa wenn das Grundmodul einen Fehler aufweist, ein oder beide anderen Module dagegen noch funktionsfähig sind.

Gemäß einer bevorzugten Weiterbildung der Erfindung weist das Grundmodul an einem Ende eine Aufnahme für das Dosiermodul auf und am entgegengesetzten anderen Ende eine Aufnahme für das Ventilhubeinstellmodul.

Zu diesem Zweck kann das Ventilgehäuse des Grundmoduls im Bereich der beiden Aufnahmen offen sein.

Eines oder beide Aufnahmen des Grundmoduls können jeweils über ein Befestigungsmittel verfügen, das mit einem dazu passenden Befestigungsmittel des Ventilhubeinstellmoduls bzw. mit einem dazu passenden Befestigungsmittel des Dosiermoduls zusammenwirkt und dabei eine lösbare Befestigung des Ventilhubeinstellmoduls an dem Grundmodul bewirkt/ermöglicht bzw. eine lösbare Befestigung des Dosiermoduls an dem Grundmodul.

Die Aufnahmen des Grundmoduls für das Ventilhubeinstellmodul und das Dosiermodul sowie der Ventilinnenraum des Ventilgehäuses, in dem das Verschlussorgan bewegbar angeordnet ist, sind bevorzugt derart ausgebildet und zueinander ausgerichtet, dass das Anschlagteil des Ventilhubeinstellmoduls und das Verschlussorgan des Dosiermoduls mittig in dem Ventilinnenraum sowie aufeinander folgend entlang einer gemeinsamen (Längsmittel-)Achse positioniert sind.

Das Grundmodul kann einen bevorzugt einstückig ausgebildeten, insbesondere aus einem metallischen Werkstoff gefertigten Spulenträgers aufweisen, auf dem die Windungen einer Spule des Elektro-Magneten aufgewickelt sind, und der einen Spulenträgerinnenraum umgibt, in dem mindestens ein Abschnitt des Verschlussorgans angeordnet ist sowie mindestens ein Abschnitt des Anschlagteils.

Weiter können das Dosiermodul und/oder das Ventilhubeinstellmodul in einer besonderen Ausführungsform der Erfindung an dem Spulenträger des Grundmoduls befestigt sein.

Der Spulenträger kann in diesem Fall einen Spulenabschnitt aufweisen, auf den die Spule aufgewickelt ist, einen sich an einer Seite anschließenden Kopfabschnitt mit einer (endständigen) Aufnahme für das Ventilhubeinstellmodul, mit der das Ventilhubeinstellmodul lösbar verbunden ist, insbesondere verschraubt, sowie einen sich an der entgegengesetzten Seite anschließenden Fußabschnitt mit einer (endständigen) Aufnahme für das Dosiermodul, mit der das Dosiermodul lösbar verbunden ist, insbesondere verschraubt.

Dabei kann die (endständige) Aufnahme für das Ventilhubeinstellmodul durch einen von dem Kopfabschnitt umgebenen Endabschnitt des Spulenträgerinnenraums und durch eine diesen Endabschnitt umgebene Wandung des Kopfabschnitts gebildet sein und die (endständige) Aufnahme für das Dosiermodul durch einen von dem Fußabschnitt umgebenen Endabschnitt des Spulenträgerinnenraums und durch eine diesen Endabschnitt umgebene Wandung des Fußabschnitts.

Jeweils eigenständiger Gegenstand der Erfindung ist entsprechend auch ein Austauschdosiermodul für das obige modulare Ventil, das nach Entfernung des Dosiermoduls des modularen Ventils lösbar mit dem Grundmodul des modularen Ventils verbindbar ist sowie ein Austauschventilhubeinstellmodul, das nach entsprechender Entfernung des Ventilhubeinstellmoduls des Ventils mit dem Grundmodul des modularen Ventils verbindbar ist.

Zu diesem Zweck würde das jeweilige Austauschmodul bevorzugt entsprechend über ein Befestigungsmittel verfügen, das mit einem dazu passenden Befestigungsmittel des Grundmoduls des modularen Ventils zusammenwirken und dabei eine lösbare Befestigung des Austauschdosiermoduls an dem Grundmodul bilden würde bzw. ermöglichen kann.

In bevorzugter Weiterbildung dieses Gedankens ist ein besonderes Austauschdosiermodul vorgesehen für den Fall, dass das obige modulare Ventil für fließfähige Medien ein (zu ersetzendes) Dosiermodul aufweist, dessen Verschlussorgan - wie oben bereits angedeutet - durch eine permanente Schließkraft in Schließstellung gehalten wird, die durch einen Dauermagneten aufgebracht wird, der einen an dem Anschlagteil angeordneten Einzelmagneten sowie einen an dem Verschlussorgan angeordneten Einzelmagneten umfasst, wobei die Einzelmagnete derart positioniert sind, dass zur Aufbringung der Schließkraft gleiche Pole einander zugekehrt sind. Für diesen Fall kann - wenn der Einsatzzweck dies erfordert bzw. wenn dies gewünscht ist - ein Austauschdosiermodul vorgesehen sein, das zwar ebenfalls - wie das zu ersetzende Dosiermodul - ein durch den Elektro-Magneten des modularen Ventils bewegbares Verschlussorgan aufweist, das in einer Schließstellung des modularen Ventils eine Ausgabeöffnung des Austauschdosiermoduls verschließen kann, das aber insbesondere anstelle des Dauermagneten eine Feder zur Aufbringung der permanenten Schließkraft auf das Verschlussorgan aufweist.

Insbesondere in diesem Fall ist es sinnvoll, auch das Ventilhubeinstellmodul des modularen Ventils zu ersetzten, insofern dessen Anschlagteil in korrespondierender Weise mindestens einen Einzelmagneten aufweist, der Teil eines/des Dauermagneten ist. In diesem Fall würde das Austauschventilhubeinstellmodul zwar ebenfalls - wie das zu ersetzende Ventilhubeinstellmodul - ein mindestens abschnittsweise in dem Ventilinnenraum des Grundmoduls anordenbares, längliches, in seiner axialen Stellung in dem Ventilinnenraum veränderbares Anschlagteil umfassen, das die Bewegung des Verschlussorgans in Richtung des Ventilhubeinstellmoduls begrenzen kann. Allerdings würde das Anschlagteil des Austauschmoduls keinen Einzelmagneten aufweisen, da dieser nicht mehr notwendig ist.

Es ist im Übrigen auch denkbar, dass das Dosiermodul des modularen Ventils eine andere Düse aufweist als das Austauschdosiermodul. So kann das Dosiermodul des modularen Ventils über eine Düse verfügen, mit der einzelne tropfenförmige Mediumportionen erzeugbar sind, und das Austauschdosiermodul eine Düse, mit der linienförmige oder flächige Mediumportionen erzeugbar sind (Breitschlitzdüse).

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen.

Darin zeigt:
- Fig. 1: eine Ventilanordnung aus mehreren erfindungsgemäßen, modularen Einzelventilen in Draufsicht,
- Fig. 2: einen Schnitt entlang der Schnittlinie II-II in Fig. 1,
- Fig. 3: die Einzelheit III aus Fig. 2 in vergrößerter Darstellung, nämlich ein einzelnes erfindungsgemäßes, modulares Ventil in montiertem Zustand,
- Fig. 4, 5: das modulare Ventil aus Fig. 4 mit verschiedenen Dosier- und Ventilhubeinstellmodulen (unmontiert).

Nachfolgend werden verschiedene Details erfindungsgemäßer (Magnet-)Ventile 14 sowie insbesondere deren Modularität näher erläutert.

In den vorliegenden Ausführungsbeispielen sind diese (modularen) Ventile 14 Teil einer Ventilanordnung 10 mit mehreren Einzelventilen 14. Es versteht sich aber, dass die Erfindung auch Einzelventile bzw. einzeln betriebene Ventile außerhalb einer solchen Anordnung 10 umfassen kann.

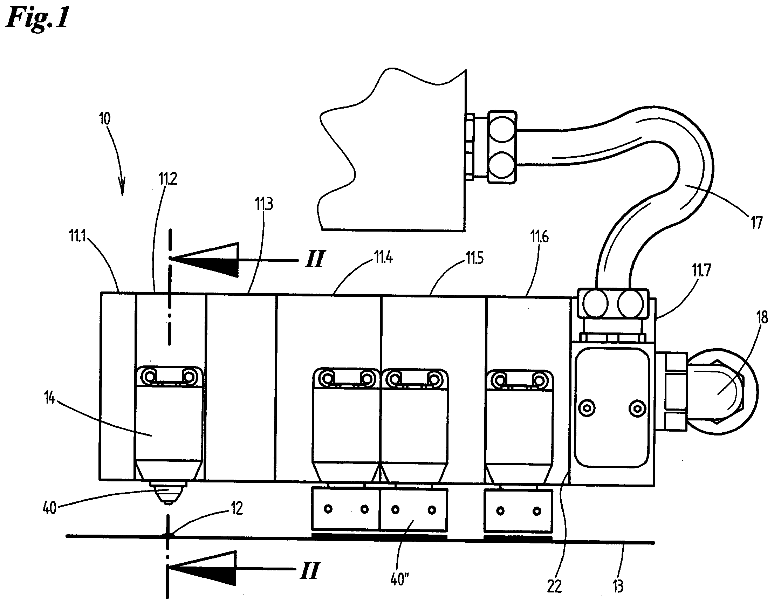

Die in Fig. 1 gezeigte Ventilanordnung 10 bzw. Einrichtung zum Auftragen von fließfähigen Medien auf Oberflächen ist aus mehreren Einzelmodulen 11.1-11.7 aufgebaut. Im Rahmen der Anmeldung wird die Gesamtheit dieser Einzelmodule vereinfachend mit 11.1-11.7 bezeichnet. Eine ähnliche Ventilanordnung ist auch in der DE 10 2014 001 897 A1 offenbart, deren Inhalt hiermit integriert wird.

In dem gezeigten Ausführungsbeispiel dient die Ventilanordnung 10 zum (mehrbahnigen) Auftragen von Leim, insbesondere Heißleim, auf Oberflächen von bei der Herstellung von Zigarettenpackungen eingesetzten Zuschnitten oder Materialbahnen auf Papier, Folie oder dergleichen. Es liegt aber natürlich auch im Rahmen der Erfindung, mit der Ventilanordnung 10 andere fluide oder fließfähige Medien, wie etwa Farben, Lacke oder dergleichen, auf Oberflächen von Gegenständen anderer Art aufzutragen.

Mit den Ventilen 14 der Ventilanordnung 10 werden jeweils einzelne (kleine) Medium- bzw. Leimportionen 12 auf beispielsweise einen Zuschnitt 13 aufgebracht. Die Einzelmodule 11.1-11.7 sind vorliegend in Längserstreckung der Ventilanordnung 10 aufeinanderfolgend in einer gemeinsamen Reihe angeordnet. Dabei sind jeweils Paare von zwei benachbarten Einzelmodulen 11.1-11.7 lösbar miteinander verbunden. Vorliegend mittels in (durchgehenden) Schraubenlöchern 63 angeordneten Schrauben.

Einige Einzelmodule, nämlich die Einzelmodule 11.2, 11.4-11.6 weisen jeweils ein Ventil bzw. eine Ventileinheit 14 auf mit jeweiliger (unterer) Ausgabe- bzw. Dosieröffnung 15. Über diese Einzelmodule 11.2, 11.4-11.6 mit jeweiliger Ventileinheit 14, nämlich über die jeweilige Dosieröffnung 15 derselben, wird das fließfähige Medium im Prozess auf die Oberfläche des Zuschnitts 12 aufgebracht.

Das Einzelmodul 11.7 dient zum Anschluss der Ventilanordnung 10 an insbesondere von der übergeordneten (Verpackungs-)Maschine, insbesondere der Maschinensteuerung, kommende Stromversorgungsleitungen und gegebenenfalls zusätzliche Steuerleitungen 16. Die Leitungen 16 sind vorliegend im Inneren eines Kabelschlauchs 17 geführt. Ausgehend von dem Modul 11.7 werden die Leitungen 16 durch die Ventilanordnung 10 zu den einzelnen Modulen 11.2, 11.4-11.6 mit Ventileinheit 14 geführt.

Das Modul 11.7 dient des Weiteren zum Anschluss der Ventilanordnung 10 an eine Mediumquelle, etwa ein Heißleimtankgerät. Zu diesem Zweck endet ein entsprechender, vorliegend beheizter Mediumschlauch 18 an dem Einzelmodul 11.7. Von dem Einzelmodul 11.7 aus wird das über den Schlauch 18 geführte Medium im Inneren der Ventilanordnung 10 verteilt und zu den einzelnen Modulen 11.2, 11.4-11.6 mit Ventileinheit 14 geführt. Das Einzelmodul 11.7 dient auch zum Anschluss an bevorzugte, ebenfalls von der Mediumquelle bzw. einem Steuergerät desselben kommenden Steuerungsleitungen (nicht dargestellt). Auch diese Steuerungsleitungen sind zu den einzelnen Modulen 11.2, 11.4-11.6 mit Ventileinheit 14 geführt.

Bei den Modulen 11.1, 11.3 handelt es sich um Zwischenmodule, mit der insbesondere die Gesamtbreite der Ventilanordnung 10 beeinflusst werden kann. Zusätzlich kann vorgesehen sein, dass die Ventileinheiten 14, wie in Fig. 1 erkennbar ist, winklig zueinander angeordnet werden und dabei insbesondere seitliche Fasen am jeweiligen Gehäuse aufweisen, um den Spurabstand zwischen benachbarten Ventileinheiten 14 zu verringern.

Jedes Einzelmodul 11.1-11.7 verfügt über einen Grundkörper 19. Die einzelnen Grundkörper 19 weisen jeweils an mindestens einer (Außen-)Seite eine Flanschfläche auf, an der dann jeweils eine entsprechende Flanschfläche des Grundkörpers 19 eines bzw. des in der gemeinsamen Reihe benachbarten Einzelmoduls 11.1-11.7 anliegt. Mit Ausnahme des Abschlussmoduls 11.1 weisen sämtliche anderen Grundkörper 19 der Einzelmodule 11.2-11.7 jeweils einen vorliegend bevorzugt parallel zur Längserstreckung der Ventilanordnung 10 verlaufenden Mediumhauptkanal 20 auf. Jedenfalls die Mediumhauptkanäle 20 derjenigen Einzelmodule 11.1-11.7, bei denen in der Reihe der Einzelmodule 11.1-11.7 jeweils an zwei Seiten andere Einzelmodule angrenzen, erstrecken sich durchgehend von der einen (Außen-)Seite mit Flanschfläche zur anderen (Außen-)Seite mit Flanschfläche. Die einzelnen Mediumhauptkanäle 20 der Grundkörper 19 der einzelnen Module 11.2-11.7 schließen dabei jeweils, insbesondere fluchtend, aneinander an, sodass sich insgesamt ein durchgehender Kanal ergibt, der sich von dem Grundkörper 19 des Moduls 11.2 bis zum Grundkörper 19 des Moduls 11.7 erstreckt.

Die Grundkörper 19 der Einzelmodule 11.2, 11.4-11.6 mit Ventil bzw. Ventileinheit 14 verfügen des Weiteren jeweils über einen von dem jeweiligen Hauptkanal 20 abgehenden Mediumzweigkanal 21. Die Zweigkanäle 21 sind dabei jeweils bis zu einer Befestigungs(außen)seite 22 des jeweiligen Grundkörpers 19 geführt. An jeder Befestigungsseite 22 ist (lösbar) die jeweilige Ventileinheit 14 befestigt. Neben dem Mediumhauptkanal 20 verfügen die Grundkörper 19 der Einzelmodule 11.2-11.7 darüber hinaus jeweils über mindestens einen, bevorzugt parallel zu dem jeweiligen Mediumhauptkanal 20 verlaufenden Kabelkanal 23.

Durch den Kabelkanal 23 sind zum einen die Strom- und gegebenenfalls Steuerungsleitungen 16 für die Ventileinheiten 14 geführt, wobei die Grundkörper 19 der entsprechenden Einzelmodule 11.2, 11.4-11.6 zusätzlich jeweils über einen von dem jeweiligen Kabelkanal 23 abgehenden Kabelzweigkanal 24 verfügen, durch den durch den Kabelkanal 23 geführte Leitungen 16 weiter bis zu den Ventileinheiten 14 geführt sind. Zum anderen sind gegebenenfalls noch nicht gezeigte Stromleitungen für Heizorgane durch den Kabelkanal 23 geführt. Die Kabelkanäle 23 der einzelnen Module fluchten dabei in ähnlicher Weise wie die Mediumhauptkanäle 20 und bilden in ebenfalls ähnlicher Weise einen durchgehenden Kanal.

Was die einzelnen Ventile bzw. Ventileinheiten 14 betrifft, so sind diese erfindungsgemäß, und dies ist besonders wichtig, modular aufgebaut. Sie verfügen jeweils über ein Grundmodul 64, ein Dosiermodul 37 sowie ein Ventilhubeinstellmodul 44, die miteinander lösbar verbunden sind. Sinn und Zweck sowie Einzelheiten dieser Modularität werden später noch näher beschrieben.

Bei den modularen Ventilen 14 handelt es sich vorliegend um elektrisch betriebene (Elektro-)Magnetventile.

Sie weisen jeweils ein einen Bestandteil des Grundmoduls 64 bildendes Gehäuse 25 auf. Jede Ventileinheit bzw. jedes Ventil 14 ist mit dem jeweiligen Grundkörper 19 - wie oben bereits angedeutet - lösbar verbunden, beispielsweise durch Schrauben 26, die in eine entsprechende Bohrung 27 der Ventileinheit 14 eingreifen.

Innerhalb des Gehäuses 25 ist als zentrales Bauteil des (jeweiligen) Ventils 14 ein insbesondere als spanend bearbeitetes Drehteil ausgebildeter, ebenfalls Bestandteil des Grundmoduls 64 bildender Spulenträger 28 angeordnet.

Der Spulenträger 28 ist einstückig ausgebildet, bevorzugt aus Metall, kann aber auch grundsätzlich mehrteilig sein.

Der Spulenträger 28 verfügt über einen von einer jeweiligen Wandung desselben umschlossenen, vorliegend durchgehenden, länglichen und aufrechten Innenraum bzw. Hohlraum (mittige Öffnung) 30. Der Innenraum 30 ist vorliegend im Wesentlichen hohlzylindrisch ausgebildet. Sowohl der Spulenträger 28 als auch entsprechend der von ihm umschlossene Innenraum 30 verfügen über mehrere Teilabschnitte.

Nämlich der Spulenträger 28 an seinem einen Ende einen (oberen) Kopfabschnitt 28a, einen sich an diesen anschließenden (mittleren) Spulen(trag)abschnitt 28b sowie an seinem anderen Ende einen sich an den Spulenabschnitt 28b anschließenden (unteren) Fußabschnitt 28c. Die jeweiligen Abschnitte 28a, 28b, 28c umschließen jeweils einen ihnen zugeordneten Teilabschnitt 30a, 30b bzw. 30c des Innenraums 30. Dabei weist der Innenraum 30a im Bereich des Kopfabschnitts 28a größere Querabmessungen auf als im Bereich des Spulenabschnitts 28b bzw. als der von dem Spulenabschnitt umgebene Innenraum 30b.

An der Außenseite des Spulenabschnitts 28b sind die Windungen eines oder mehrerer, elektrisch betriebener Spulen 31 eines bzw. des Elektro-Magneten des Ventils 14 aufgewickelt. Der Elektro-Magnet bzw. die Spule(n) 31 sind entsprechend ebenfalls Bestandteil des Grundmoduls 64. Zudem ein (elektrischer) Verbindungsanschluss 70 (vorliegend ein Stecker), zur Verbindung mit den zu der Spule 31 führenden Strom(versorgungs)leitungen 16, über die die Spule 31 mit Betriebsstrom versorgt werden kann.

In dem Innenraum 30 des Spulenträgers 28, genauer gesagt, im Inneren des Elektro-Magneten bzw. der Spule 31, ist als Kern bzw. Anker des Elektro-Magneten ein Verschluss- bzw. Dosierorgan 32 bewegbar angeordnet, etwa ein Ventilstößel. An einem unteren Schaft 33 des Verschlussorgans 32 ist ein Verschlussmittel bzw. ein Verschlussstück 34 angeordnet, vorliegend eine Kugel. Das Verschlussmittel 34 ist der Ventil- oder Dosieröffnung 15 des Ventils 14 zugeordnet. Die Ventilöffnung 15 befindet sich mittig im Bereich eines trichterförmigen Ventilsitzes 36. Das Verschlussmittel 34 liegt dabei in Schließstellung des Ventils 14 an insbesondere konischen Sitzflächen des Ventilsitzes 36 an.

Das Verschlussorgan 32 und der Ventilsitz 36 sind dabei Teil des Dosiermoduls 37. Das Dosiermodul 37 ist lösbar an dem Grundmodul 64 befestigt. Im vorliegenden Fall an dem Spulenträger 28 desselben. Konkret ist es mit einer endständigen Aufnahme 38 für das Dosiermodul 37 des Fußabschnitts 28c des Spulenträgers 28 des Grundmoduls 64 verbunden. Dies muss aber nicht so sein. Auch eine Befestigung an anderen Teilen des Grundmoduls 64 ist denkbar.

Die Aufnahme 38 des Grundmoduls 64 für das Dosiermodul 37 umfasst dabei am freien Ende des Fußabschnitts 28c des Spulenträgers 28 eine durch einen Endabschnitt des Innenraums 30 des Spulenträgers 28 gebildete bzw. eine durch einen entsprechenden Endabschnitt des Fußabschnitts 28c umgebene Öffnung 39. Das Dosiermodul 37, konkret im vorliegenden Fall ein den Ventilsitz 36 aufweisendes Düsenteil (Düse) 40 desselben, sitzt in der Aufnahme 38 bzw. der Öffnung 39.

Mit dem Düsenteil 40 verbunden ist ein Befestigungsteil 41, etwa eine (Überwurf-)Mutter, das lösbar mit dem Grundmodul 64 verbunden ist.

Nämlich mit einer (hohlzylindrischen) Aufnahmewandung 42 der Aufnahme 38 des Spulenträgers 28 bzw. des Fußabschnitts 28c desselben. Die Aufnahmewandung 42 weist im vorliegenden Fall zu diesem Zweck ein Gewinde 43 auf, das mit einem entsprechenden Gegengewinde des Befestigungsteils 41 verschraubt ist.

Im Bereich des Kopfabschnitts 28a des Spulenträgers 28 des Grundmoduls 64 ist das Ventilhubeinstellmodul 44 angeordnet. Dieses ist mit einer endständigen Aufnahme 45 für das Ventilhubeinstellmodul 44 des Grundmoduls 64 lösbar verbunden. Nämlich mit dem Kopfabschnitt 28a des Spulenträgers 28.

Die Aufnahme 45 des Grundmoduls 64 für das Ventilhubeinstellmodul 44 umfasst in diesem Fall am freien Ende des Kopfabschnitts 28a des Spulenträgers 28 eine durch einen Endabschnitt des Innenraums 30 des Spulenträgers 28 gebildete bzw. eine von einem entsprechenden Endabschnitt des Kopfabschnitts 28a umgebene Öffnung 46. Das Ventilhubeinstellmodul 44, im vorliegenden Fall ein Einstellmittel 47 desselben, sitzt dabei in der Aufnahme 45 bzw. der Öffnung 46.

Konkret ist das das Ventilhubeinstellmodul 44 mit der Aufnahme 45 des Kopfabschnitts 28a des Spulenträgers 28 verschraubt bzw. mit einer Wandung 48 der Aufnahme 45.

Dazu ist das Einstellmittel 47, etwa eine Einstellschraube, außen mit einem Bewegungsgewinde versehen. Ein entsprechendes Gegengewinde ist innenseitig in der entsprechenden, durch den Kopfabschnitt 28a gebildeten Aufnahmewandung 48 angeordnet.

Das Einstellmittel 47 verfügt endseitig (am oberen Ende) über eine Ausnehmung 61 oder über ein Ansatzstück 61, an der bzw. an dem ein Werkzeug angesetzt werden kann, bspw. ein Innensechskantschlüssel. Durch einen Werker bewirkte Drehungen des Einstellmittels 47 um dessen Längsmittelachse bewirken dann eine axiale Bewegung des Einstellmittels 47 entweder nach oben oder nach unten, das heißt entweder in Richtung des Endes des Ventils 14, an dem die Dosieröffnung bzw. die Dosiereinheit 37 angeordnet ist - Dosierende -, oder in die entsprechende entgegengesetzte Richtung. Mit Hilfe des Einstellmittels 47 kann auf diese Weise ein mit diesem verbundenes Anschlagteil 49 des Ventilhubeinstellmoduls 44 axial in dem Innenraum 30 in Richtung des Dosierendes oder in die entgegengesetzte Richtung bewegt werden.

Das Anschlagteil 49 bildet dabei einen einstellbaren Hubbegrenzer für das Verschlussorgan 32, der die Länge des Weges begrenzt, um den das Verschlussorgan 32 während einer Öffnungsbewegung des Verschlussorgans 32 in dem Innenraum 30 maximal nach oben bewegt werden kann.

Das Ventilhubeinstellmodul 44 ist in besonderer Weise derart ausgebildet, dass bei Drehung des Einstellmittels 47 keine Mitrotation des Anschlagteils 49 erfolgt. Mit anderen Worten bleibt dabei die Drehlage des Anschlagteils 49 relativ zur Axialen bzw. zur Längsmittelachse des Innenraums 30 unverändert.

Hierfür ist das Einstellmittel 47 drehbar mit dem Anschlagteil 49 verbunden, wobei es bezogen auf Axialbewegungen des Einstellmittels 47 mit diesen zwangsgekoppelt ist. Diese Zwangskopplung wird vorliegend erreicht, indem das Einstellmittel 47 über einen drehfest, insbesondere einstückig mit diesem verbundenen Zapfen 50 verfügt, der drehbar in einem länglichen, insbesondere zylindrischen Hohlraum bzw. Innenraum 51 einer insbesondere einstückig mit dem Anschlagteil 49 drehfest verbundenen Zapfenaufnahme 52 gelagert ist. Der Zapfen 50 ist dabei gegen axiale Relativbewegung zwischen Zapfen 50 und Zapfenaufnahme 52 gesichert. Nämlich durch eine Formschlussverbindung 53 zwischen Zapfen 50 und Zapfenaufnahme 52. Konkret weist der Zapfen 50 an seinem freien Ende einen Ansatz 54 mit einem im Vergleich zum Hohlraum 51 größeren Durchmesser auf.

Sollten trotz der drehbaren Lagerung des Einstellmittels 47 an dem Anschlagteil 49 bei Drehung des Einstellmittels 47 noch Drehkräfte auf das Anschlagteil 49 übertragen werden, so verhindert ein Dichtungsring 62 zwischen Anschlagteil 49 und der Innenseite der angrenzenden Wandung 48 des Kopfabschnitts 28a des Spulenträgers 28 eine Rotation des Anschlagteils 49 durch entgegengerichtete Reibungskräfte.

Wie oben bereits erwähnt ist der Spulenträger 28 ein zentrales Bauteil des vorliegenden Ventils 14. Der modulare Aufbau desselben ist allerdings auch mit Spulenträgern anderer Ausbildung möglich.

Der Spulenträger 28 erstreckt sich letztlich fast durch das gesamte Ventil 14 (auch dies muss aber nicht so sein). Sowohl die Dosiereinheit 37 als auch das Ventilhubeinstellmodul 44 sind an dem Spulenträger 28 befestigt und das Verschlussorgan 32 in diesem bewegbar gelagert.

Dabei sind das Anschlagteil 49 der Ventilhubeinstelleinheit 44 und das Verschlussorgan 32 der Dosiereinheit 37 mittig in dem Innenraum 30 des Spulenträgers 28 sowie aufeinanderfolgend entlang einer gemeinsamen (Längsmittel-)Achse positioniert. Das Verschlussorgan 32 ist durch eine bzw. die (hohlzylindrische) Wandung des Spulenabschnitts 28b des Spulenträgers 28 in dem Innenraum 30 in axialer Richtung geführt.

Der von der Aufnahme 45 für das Ventilhubeinstellmodul 44 umgebene Innenraumabschnitt 30a des Spulenträgers 28, der von dem Spulenabschnitt 28b umgebene Innenraumabschnitt 30b desselben und dessen von der Aufnahme 38 für die Dosiereinheit 37 umgebene Innenraumabschnitt 30c sind entlang einer gemeinsamen (Längsmittel-)Achse angeordnet.

Die vorgenannten Maßnahmen führen letztlich zu einer hervorragenden und dauerhaften Ausrichtung der vorgenannten Bauteile zueinander. Diese stellt sich - anders als im Stand der Technik - konzeptbedingt quasi automatisch ein, da es beim Zusammenbau bzw. der Montage des Ventils 14 letztlich zu einer Selbstzentrierung bzw. Selbstausrichtung der einzelnen, vorgenannten Bauteile kommt. Toleranzketten, wie sie insbesondere auftreten, wenn ein mehrteiliges Ventilgehäuse eingesetzt wird, an dessen einzelnen Gehäuseteilen die vorgenannten Bauteile befestigt sind, werden wirksam verhindert.

Was die Mediumzufuhr betrifft, so wird dem Ventil 14 das zu verarbeitende Medium (beispielsweise Leim oder ein anderes Fluid) über einen Mediumanschluss 55 zugeführt. Dabei gelangt das Medium über einen in dem Kopfabschnitt 28a des Spulenträgers 28 angeordneten, von der Außenseite des Kopfabschnitts 28a bis zum Innenraum 30 führenden Mediumkanal 56 im oberen Bereich des Leimventils 14 in den Innenraum 30 des Leimventils 14.

Anschließend gelangt es in den Bereich des Innenraums 30, in dem sich das Anschlagteil 49 befindet. Dieses weist für einen guten Mediumfluss daher in dem Bereich, in dem der Mediumkanal in den Innenraum 30 mündet bzw. dort, wo dieser endet, an der Außenseite oder Außenkontur eine insbesondere umlaufende, nach innen gerichtete Vertiefung oder Wölbung auf.

Im Betrieb fließt das Medium dann aus dem oberen Bereich des Innenraums 30 bzw. dem von dem Kopfabschnitt 28a begrenzten Innenraumteilabschnitt 30a in den Innenraum 30 nach unten entlang des Verschlussorgans 32 in Richtung der Dosieröffnung 15 und zwar in eine von dem Düsenteil 40 bzw. dem Ventilsitz 36 begrenzte Ventilkammer 58.

Aus der Ventilkammer 58 kann das Medium durch geeignete Bewegung des Verschlussorgans 32 durch Freigabe der Ausgabe- bzw. Dosieröffnung 15 gesteuert aus dem Ventil 14 herausgeführt werden bzw. herausfließen. Zu diesem Zweck wird das Verschlussorgan 32 durch geeignete Beaufschlagung des Elektro-Magneten mit elektrischem Strom unter Aufbringung einer Öffnungskraft gegen eine das Verschlussorgan 32 in den Ventilsitz drückende Rückhol- oder Schließkraft in Richtung des Anschlagteils 49 bewegt, sodass das Medium aus der Ventilkammer 58 austreten kann.

Die Spule 31 des Elektro-Magneten des Grundmoduls 64 umgibt das Verschlussorgan 32 des Dosiermoduls 37 zumindest abschnittsweise. Das Verschlussorgan 32, bevorzugt ein magnetisierbares, in der Regel metallisches Kolbenstück 59 desselben, wirkt - wie oben bereits angedeutet - innerhalb der Spule 31 als Kern des Elektromagneten.

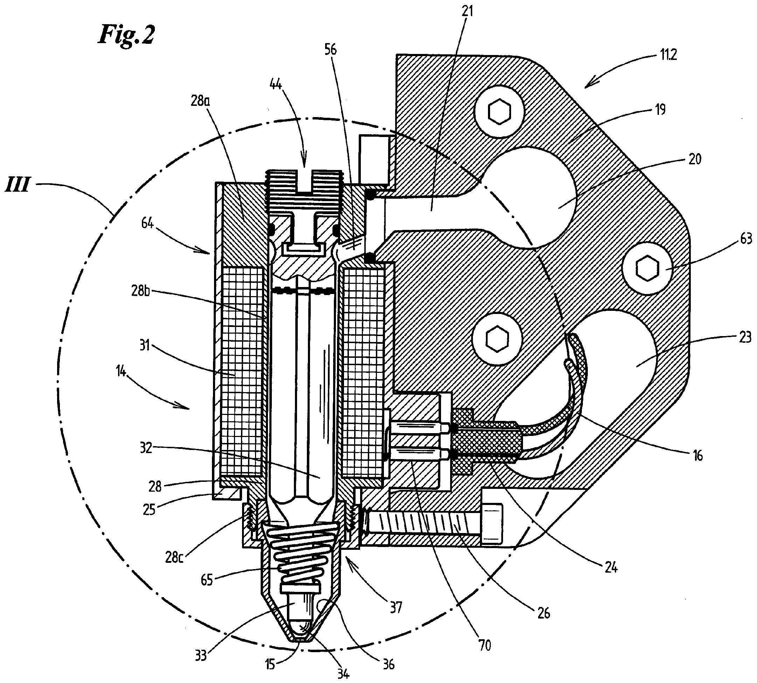

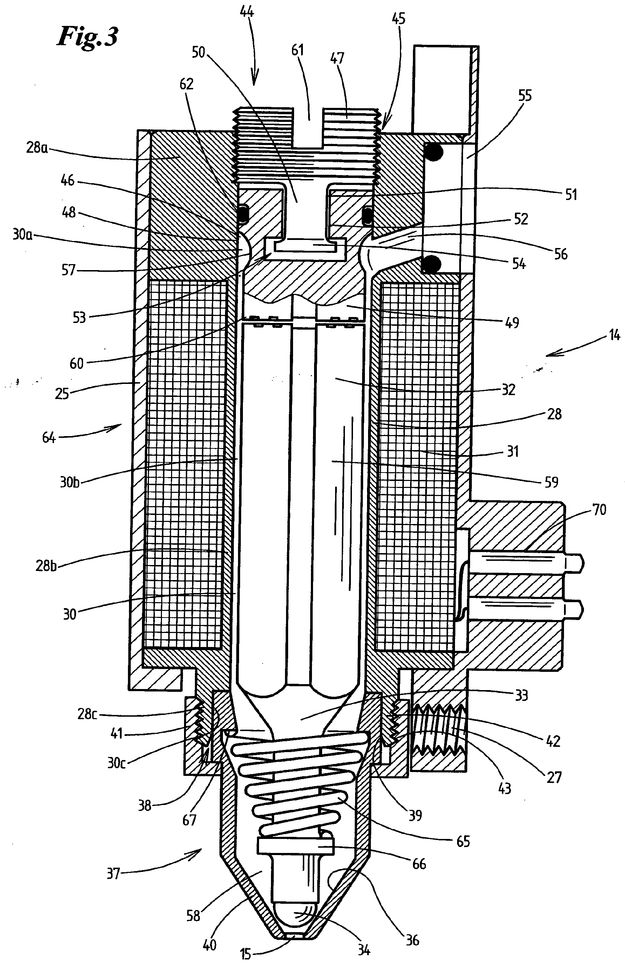

Das Verschlussorgan 32 ist vorzugsweise permanent in Schließrichtung beaufschlagt von der Schließkraft eines Schließmittels bzw. Schließorgans. Bei dem in den Fig. 1-3 gezeigten modularen Ventil 14 ist das Schließorgan eine (Rückhol-)Feder 65.

Diese umgibt das Verschlussorgan 32 in einem (vorderen) Bereich innerhalb der Düse 40 bzw. des Düsenteils. Sie stützt sich an einem (vorderen) Ende an einem ringförmigen, radialen Vorsprung 66 der Düse 40 ab, mit ihrem anderen (hinteren Ende) an einem (umlaufenden) Stützabschnitt 67 der Düse 40.

Ein solches Ventil 14, bei dem die Schließkraft mit einer Feder aufgebracht wird, wird bevorzugt eingesetzt, wenn das fließfähige Medium eine sehr hohe Viskosität aufweist. Denn dann sind besonders große Schließkräfte notwendig.

Es gibt aber auch andere Fälle, in denen es sinnvoll wäre, die Schließkraft auf andere Weise aufzubringen. Denn der Einsatz einer Feder zum Aufbringen derselben kann auch zu einem sehr hohen Verschleiß derselben führen, etwa bei hohen Betriebsfrequenzen des Ventils 14. Dann kann das Aufbringen der Schließkraft mittels eines Dauermagneten zweckmäßig sein.

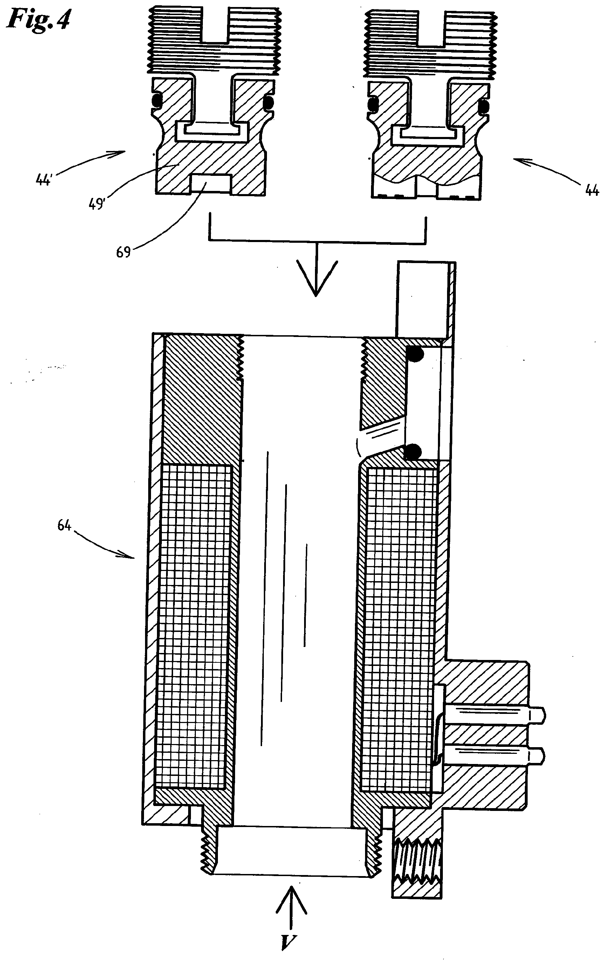

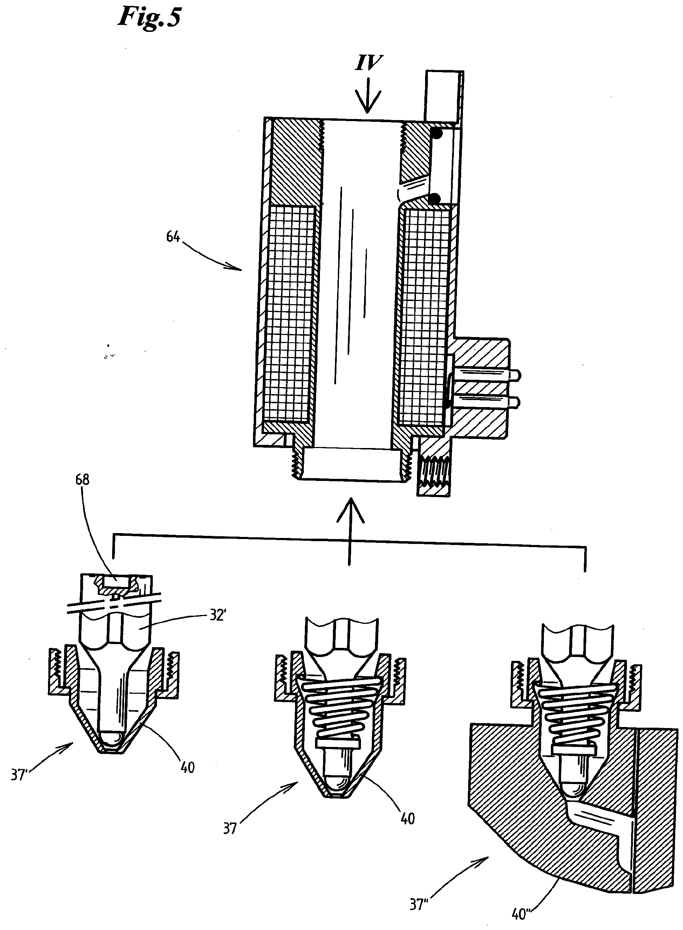

Nicht nur, aber insbesondere in einem derartigen Fall, ist der modulare Aufbau des Ventils 14 sehr vorteilhaft. Denn mittels eines einfachen Austauschs des Dosiermoduls 37 durch ein (Austausch-)Dosiermodul 37' und des Ventilhubeinstellmoduls 44 durch ein (Austausch-)Ventilhubeinstellmodul 44' bei Beibehaltung des Grundmoduls 64 kann bei entsprechender Ausbildung der Austauschmodule das Ventil 14 funktional an einen anderen Einsatzweck angepasst werden, vgl. Fig. 4 und 5. Ein Komplettaustausch des gesamten Ventils 14 wäre daher nicht notwendig.

Ein Modul-Austausch ist aufgrund der lösbaren Verbindung von Dosiermodul 37 und Ventilhubeinstellmodul 44 leicht zu bewerkstelligen. Es müssen nur deren jeweilige Schraubverbindungen mit dem Grundmodul 64 gelöst und die Module anschließend von dem Grundmodul 64 entfernt werden. Das (Austausch-)Dosiermodul 37' und das (Austausch-)Ventilhubeinstellmodul 44' werden dann mit den entsprechenden Aufnahmen 38 bzw. 45 des Grundmoduls 64 verbunden bzw. in diese eingesteckt und schließlich an dem Grundmodul 64 befestigt bzw. mit diesem verschraubt.

Das Dosiermodul 37' weist dann - anders als das Dosiermodul 37 - ein Verschlussorgan 32' auf, das im Bereich seines dem Anschlagteil 49 zugekehrten Endes über einen (es können auch mehrere sein) Einzelmagneten 68 verfügt. Der Einzelmagnet 68 ist dabei Teil eines die Schließkraft aufbringenden Dauermagneten.

Der andere Teil des Dauermagneten ist ein (ggf. auch mehrere) Einzelmagnet, der an dem Anschlagteil 49' des Ventilhubeinstellmoduls 44' angeordnet ist, bevorzugt am freien Ende 60 des Anschlagteils 49'. Dieses dient insofern auch als Magnethalter. Dessen axiale Stellung relativ zu dem Verschlussorgan 32' bzw. dessen axialer Abstand zu dem Verschlussorgan 32' kann in der oben bereits beschriebenen Weise eingestellt/beeinflusst werden.

Die beiden Einzelmagnete 68, 69 sind derart positioniert, dass gleiche Pole einander zugekehrt sind und entsprechend eine permanente (abstoßende) Magnetkraft auf das Verschlussorgan 32' ausgeübt wird, nämlich die oben bereits erwähnte Schließkraft.

Es ist im Übrigen auch denkbar, dass das jeweilige Austauschdosiermodul eine andere Düse aufweist als das gerade an dem Ventil 14 befestigte Modul. Die Dosiermodule 37 und 37' weisen beispielsweise jeweils Düsen 40 auf, mit denen tropfenförmige Mediumportionen erzeugbar sind. Bei dem Dosiermodul 37" dagegen, vgl. Fig. 5, ist eine sogenannte Breitschlitzdüse 40" zu erkennen, mit denen flächenhafte oder lininenhafte Mediumportionen erzeugt werden können.

**Bezugszeichenliste:**

| | | | |
|---|---|---|---|
| 10 | Ventilanordnung | 37' | Dosiermodul |
| 11.1 | Einzelmodul | 37" | Dosiermodul |
| 11.2 | Einzelmodul | 38 | Aufnahme für Dosiermodul |
| 11.3 | Einzelmodul | 39 | Öffnung der Aufnahme |
| 11.4 | Einzelmodul | 40 | Düsen |
| 11.5 | Einzelmodul | 40" | Düsen |
| 11.6 | Einzelmodul | 41 | Befestigungsteil |
| 11.7 | Einzelmodul | 42 | Aufnahmewandung |
| 12 | Medium- bzw. Leimportionen | 43 | Gewinde |
| 13 | Zuschnitt | 44 | Ventilhubeinstellmodul |
| 14 | Ventileinheit | 44' | Ventilhubeinstellmodul |
| 15 | Ausgabe- bzw. Dosieröffnung | 45 | Aufnahme für Hubstellmodul |
| 16 | Steuerleitungen | 46 | Öffnung der Aufnahme |
| 17 | Kabelschlauch | 47 | Einstellmittel |
| 18 | Mediumschlauch | 48 | Aufnahmewandung |
| 19 | Grundkörper | 49 | Anschlagteil |
| 20 | Mediumhauptkanal | 49' | Anschlagteil |
| 21 | Mediumzweigkanal | 50 | Zapfen |
| 22 | Befestigungs(außen)seite | 51 | Hohlraum |
| 23 | Kabelkanal | 52 | Zapfenaufnahme |
| 24 | Kabelzweigkanal | 53 | Formschlussverbindung |
| 25 | Gehäuse | 54 | Ansatz |
| 26 | Schrauben | 55 | Mediumanschluss |
| 27 | Bohrung | 56 | Mediumkanal in Kopfabschnitt |
| 28 | Spulenträger | 57 | Ringkanal |
| 28a | Kopfabschnitt | 58 | Ventilkammer |
| 28b | Spulenabschnitt | 59 | Kolbenstück |
| 28c | Fußabschnitt | 60 | Freies Ende Anschlagteil |
| 30 | Innenraum | 61 | Ausnehmung |
| 30a | Innraumteilabschnitt | 62 | Dichtungsring |
| 30b | Innraumteilabschnitt | 63 | Schraubenlöcher |
| 30c | Innraumteilabschnitt | 64 | Grundmodul |
| 31 | Spule | 65 | Feder |
| 32 | Verschlussorgan | 66 | Radialer Vorsprung |
| 32' | Verschlussorgan | 67 | Stützabschnitt |
| 33 | Schaft | 68 | Einzelmagnet Verschlussorgan |
| 34 | Verschlussmittel | 69 | Einzelmagnet Anschlagteil |
| 36 | Ventilsitz | 70 | Verbindungsanschluss |
| 37 | Dosiermodul | | |

## Patentansprüche

1. Modulares Ventil (14) für fließfähige Medien, insbesondere Leimventil, mit einem Grundmodul (64) mit einem Ventilgehäuse (25) und einem Elektro-Magneten, mit einem Dosiermodul (37, 37', 37") mit einem durch den Elektro-Magneten bewegbaren Verschlussorgan (32, 32'), das in einer Schließstellung des modularen Ventils (14) eine Ausgabeöffnung des Dosiermoduls (37, 37', 37") verschließt, und mit einem Ventilhubeinstellmodul (44, 44') zur Einstellung des Ventilhubs, das ein mindestens abschnittsweise in einem Ventilinnenraum des Grundmoduls (64) angeordnetes, längliches, in seiner axialen Stellung in dem Ventilinnenraum veränderbares Anschlagteil (49, 49') umfasst, das die Bewegung des Verschlussorgans (32, 32') in Richtung des Ventilhubeinstellmoduls (44, 44') begrenzt, wobei das Dosiermodul (37, 37', 37") und das Ventilhubeinstellmodul (44, 44') derart lösbar mit dem Grundmodul (64) verbunden sind, insbesondere verschraubt, dass die Module (37, 37', 37", 44, 44', 64), insbesondere das Dosiermodul (37, 37', 37") und das Ventilhubeinstellmodul (44, 44'), jeweils durch ein anderes Modul (37, 37', 37", 44, 44', 64) gleicher Modulart ersetzt werden kann.

2. Modulares Ventil gemäß Anspruch 1, **dadurch gekennzeichnet, dass** das Dosiermodul (37, 37', 37") und das Ventilhubeinstellmodul (44, 44') bei Beibehaltung des Grundmoduls (64) durch ein anderes Dosiermodul (37, 37', 37") bzw. ein anderes Ventilhubeinstellmodul (44, 44') ersetzbar ist.

3. Modulares Ventil gemäß Anspruch 1 oder 2, **dadurch gekennzeichnet, dass** das Grundmodul (64) an einem Ende eine Aufnahme (38) für das Dosiermodul (37, 37', 37") aufweist und am entgegengesetzten anderen Ende eine Aufnahme (45) für das Ventilhubeinstellmodul (44, 44').

4. Modulares Ventil gemäß Anspruch 3, **dadurch gekennzeichnet, dass** das Ventilgehäuse (25) des Grundmoduls (64) im Bereich der beiden Aufnahmen (38, 45) offen ist.

5. Modulares Ventil gemäß Anspruch 3 oder 4, **dadurch gekennzeichnet, dass** eine oder beide Aufnahmen des Grundmoduls (64) jeweils über ein Befestigungsmittel verfügen, das mit einem dazu passenden Befestigungsmittel des Ventilhubeinstellmoduls (44, 44') bzw. mit einem dazu passenden Befestigungsmittel des Dosiermoduls (37, 37', 37") zusammenwirkt und dabei eine lösbare Befestigung des Ventilhubeinstellmoduls (44, 44') an dem Grundmodul (64) bewirkt bzw. eine lösbare Befestigung des Dosiermoduls (37, 37', 37") an dem Grundmodul (64).

6. Modulares Ventil gemäß einem oder mehreren der vorhergehenden Ansprüche 3-5, **dadurch gekennzeichnet, dass** die Aufnahmen (38, 45) des Grundmoduls (64) für das Ventilhubeinstellmodul (44, 44') und das Dosiermodul (37, 37', 37") sowie der Ventilinnenraum des Ventilgehäuses (25) des Grundmoduls (64), in dem das Verschlussorgan (32, 32') bewegbar angeordnet ist, derart ausgebildet und zueinander ausgerichtet sind, dass das Anschlagteil (49, 49') des Ventilhubeinstellmoduls (44, 44') und das Verschlussorgan (32, 32') des Dosiermoduls (37, 37', 37") mittig in dem Ventilinnenraum sowie aufeinander folgend entlang einer gemeinsamen (Längsmittel-)Achse positioniert sind.

7. Modulares Ventil gemäß Anspruch 6, **dadurch gekennzeichnet, dass** das Grundmodul (64), insbesondere innerhalb seines Ventilgehäuses (25), einen bevorzugt einstückig ausgebildeten, insbesondere aus einem metallischen Werkstoff gefertigten Spulenträgers (28) aufweist, auf dem die Windungen einer Spule (31) des Elektro-Magneten aufgewickelt sind, und der einen Spulenträgerinnenraum umgibt, in dem mindestens ein Abschnitt des Verschlussorgans (32, 32') angeordnet ist sowie mindestens ein Abschnitt des Anschlagteils (49, 49').

8. Modulares Ventil gemäß Anspruch 7, **dadurch gekennzeichnet, dass** das Dosiermodul (37, 37', 37") und/oder das Ventilhubeinstellmodul (44, 44') an dem Spulenträger (28) des Grundmoduls (64) befestigt ist/sind.

9. Modulares Ventil gemäß Anspruch 7 oder 8, **dadurch gekennzeichnet, dass** der Spulenträger (28) einen Spulenabschnitt (28b) aufweist, auf den die Spule (31) aufgewickelt ist, einen sich an einer Seite anschließenden Kopfabschnitt (28a) mit einer (endständigen) Aufnahme (45) für das Ventilhubeinstellmodul (44, 44'), mit der das Ventilhubeinstellmodul (44, 44') lösbar verbunden ist, insbesondere verschraubt, sowie einen sich an der entgegengesetzten Seite anschließenden Fußabschnitt (28c) mit einer (endständigen) Aufnahme (38) für das Dosiermodul (37, 37', 37"), mit der das Dosiermodul (37, 37', 37") lösbar verbunden ist, insbesondere verschraubt.

10. Modulares Ventil gemäß Anspruch 9, **dadurch gekennzeichnet, dass** die (endständige) Aufnahme (45) für das Ventilhubeinstellmodul (44, 44') durch einen von dem Kopfabschnitt (28a) umgebenen Endabschnitt des Spulenträgerinnenraums (30) und durch eine diesen Endabschnitt umgebene Wandung des Kopfabschnitts (28a) gebildet ist, und dass die (endständige) Aufnahme (38) für das Dosiermodul (37, 37', 37") durch einen von dem Fußabschnitt (28c) umgebenen Endabschnitt des Spulenträgerinnenraums (30) und durch eine diesen Endabschnitt umgebene Wandung des Fußabschnitts (28c) gebildet ist.

11. Austauschdosiermodul, insbesondere mit einem oder mehreren Merkmalen der Ansprüche 1-10, für ein modulares Ventil (14) für fließfähige Medien gemäß einem oder mehreren der vorhergehenden Ansprüche 1-10, **dadurch gekennzeichnet, dass** das Austauschdosiermodul (37, 37', 37") nach Entfernung des (zu ersetzenden) Dosiermoduls (37, 37', 37") des modularen Ventils (14) lösbar mit dem Grundmodul (64) des modularen Ventils (14) verbindbar ist.

12. Austauschdosiermodul gemäß Anspruch 11, **dadurch gekennzeichnet, dass** es über ein Befestigungsmittel verfügt, das mit einem dazu passenden Befestigungsmittel des Grundmoduls (64) des modularen Ventils (14) zusammenwirken und dabei eine lösbare Befestigung des Austauschdosiermoduls (37, 37', 37") an dem Grundmodul (64) ermöglichen kann.

13. Austauschdosiermodul gemäß Anspruch 11 oder 12, wobei das modulare Ventil (14) ein (zu ersetzendes) Dosiermodul (37') aufweist, dessen Verschlussorgan (32') durch eine permanente Schließkraft in Schließstellung gehalten wird, die durch einen Dauermagneten aufgebracht wird, der (mindestens) einen an dem Anschlagteil (49') angeordneten Einzelmagneten sowie (mindestens) einen an dem Verschlussorgan (32') angeordneten Einzelmagneten umfasst, wobei die Einzelmagnete derart positioniert sind, dass zur Aufbringung der Schließkraft gleiche Pole einander zugekehrt sind, wobei das Austauschdosiermodul (37) ein durch den Elektro-Magneten des modularen Ventils (14) bewegbares Verschlussorgan (32) aufweist, das in einer Schließstellung des modularen Ventils (14) eine Ausgabeöffnung des Austauschdosiermoduls (37) verschließen kann, und wobei das Austauschdosiermodul (37) eine Feder zur Aufbringung der permanenten Schließkraft auf das Verschlussorgan (32) aufweist.

14. Austauschdosiermodul gemäß Anspruch 11, 12 oder 13, wobei das Dosiermodul (37, 37', 37") des modularen Ventils (14) eine Düse aufweist, mit der einzelne tropfenförmige Mediumportionen erzeugbar sind, und wobei das Austauschdosiermodul (37, 37', 37") eine Düse aufweist, mit der linienförmige- oder flächige Mediumportionen erzeugbar sind.

15. Austauschventilhubeinstellmodul, insbesondere mit einem oder mehreren Merkmalen der Ansprüche 1-10, für ein modulares Ventil (14) für fließfähige Medien gemäß einem oder mehreren der vorhergehenden Ansprüche 1-10, **dadurch gekennzeichnet, dass** das Austauschventilhubeinstellmodul nach Entfernung des (zu ersetzenden) Ventilhubeinstellmoduls (44, 44') des modularen Ventils (14) lösbar mit dem Grundmodul (64) des modularen Ventils (14) verbindbar ist.

16. Austauschventilhubeinstellmodul gemäß Anspruch 15, wobei das modulare Ventil (14) ein (zu ersetzendes) Ventilhubeinstellmodul (44') zur Einstellung des Ventilhubs aufweist, dessen Anschlagteil (49') (mindestens) einen Einzelmagneten aufweist, der Teil eines Dauermagneten ist, der auf das Verschlussorgan (32) des modularen Ventils (14) eine permanente Schließkraft aufbringt und dieses in einer Schließstellung hält, wobei der Dauermagnet (mindestens) einen an dem Anschlagteil (49') angeordneten Einzelmagneten sowie einen an dem Verschlussorgan (32') angeordneten Einzelmagneten umfasst, wobei die Einzelmagnete derart positioniert sind, dass zur Aufbringung der Schließkraft gleiche Pole einander zugekehrt sind, wobei das Austauschventilhubeinstellmodul (44) nach Entfernung des Ventilhubeinstellmoduls (44') lösbar mit dem Grundmodul (64) des modularen Ventils (14) verbindbar ist, wobei das Austauschventilhubeinstellmodul (44) ein mindestens abschnittsweise in einem Ventilinnenraum des Grundmoduls (64) anordenbares, längliches, in seiner axialen Stellung in dem Ventilinnenraum veränderbares Anschlagteil (49) umfasst, das die Bewegung des Verschlussorgans (32) in Richtung des Austauschventilhubeinstellmoduls (44) begrenzen kann, wobei das Anschlagteil (49) des Austauschventilhubeinstellmoduls (44) keinen Einzelmagneten aufweist.

17. Austauschventilhubeinstellmodul gemäß Anspruch 15 oder 16, **dadurch gekennzeichnet, dass** es über ein Befestigungsmittel verfügt, das mit einem dazu passenden Befestigungsmittel des Grundmoduls (64) des modularen Ventils (14) zusammenwirken und dabei eine lösbare Befestigung des Austauschventilhubeinstellmodul (44, 44') an dem Grundmodul ermöglichen kann.

18. Ventilmodulsatz mit einem modularen Ventil gemäß einem oder mehreren der vorhergehenden Ansprüche 1-10, mit einem dazu passenden Austauschdosiermodul (37, 37', 37") gemäß einem oder mehreren der Ansprüche 11-14 und/oder mit einem dazu passenden Austauschventilhubeinstellmodul (44, 44') gemäß einem oder mehreren der Ansprüche 15-17.
